# EUROPÄISCHE PATENTSCHRIFT

(11) **EP 1 333 168 B1**
(45) Veröffentlichungstag und Bekanntmachung des Hinweises auf die Patenterteilung: **28.09.2005**
(21) Anmeldenummer: 02100084.9
(22) Anmeldetag: 30.01.2002
(51) Int. Cl.: F02B 43/00, F02D 19/02, F02M 21/02

(54) **Verfahren zum Betrieb einer Brennkraftmaschine mit Erdgas**
Method of operating an internal combustion engine with compressed natural gas
Opération d'un moteur à combustion interne à gaz naturel comprimé

(43) Veröffentlichungstag der Anmeldung: 06.08.2003
(73) Patentinhaber: Ford Global Technologies, LLC, Dearborn, MI 48126 (US)
(72) Erfinder: Seifert, Klaus, 50226, Frechen (DE); Schick, Thomas, 50935, Köln (DE)
(74) Vertreter: Drömer, Hans-Carsten

(56) Entgegenhaltungen:
- EP-A- 0 760 424
- EP-A- 0 854 276
- US-A- 4 523 548
- US-A- 5 329 908
- US-B- 6 202 601

## Beschreibung

Die Erfindung betrifft ein Verfahren zum Betrieb einer Brennkraftmaschine mit Erdgas, wobei das Erdgas unter erhöhtem Druck nach Abschluß des Ansaugtaktes in die Brennkammer eingeblasen wird. Ferner betrifft die Erfindung eine Brennkraftmaschine enthaltend
- mindestens eine Brennkammer mit einem Lufteinlaß, einem Einlaßventil, einem Luftauslaß, einem Auslaßventil und einer steuerbaren Einblaseinrichtung für komprimiertes Erdgas sowie
- eine Motorsteuerung, welche mit dem Einlaßventil, dem Auslaßventil und der Einblaseinrichtung verbunden ist.

Aus der US 5 329 908 ist eine Brennkraftmaschine bekannt, welche mit komprimiertem Erdgas (CNG: Compressed Natural Gas) betrieben wird. Erdgas besteht überwiegend aus Methan (CH₄) und unterscheidet sich in seinen chemischen Eigenschaften wesentlich von Benzin, welches bei der großen Mehrzahl der Brennkraftmaschinen als Kraftstoff verwendet wird. Beim Betreiben von Viertakt-Ottomotoren mit komprimiertem Erdgas sind insbesondere dessen hohe Oktanzahl (ORZ 120-125) sowie die Tatsache, daß der gasförmige Zustand bis zu einem Druck von 300 bar erhalten bleibt, von Interesse. Nachteilig bei der Verwendung von Erdgas ist jedoch die Verschlechterung des sog. Liefergrades, wenn das Gas zusammen mit der Luft vom Motor angesaugt wird. In diesem Falle wird nämlich entsprechend dem Volumenanteil des Erdgases weniger Luft in den Zylinder gesaugt, wodurch sich die maximale Gesamtmenge an Luft-Kraftstoffgemisch im Zylinder um etwa 12% reduziert.

Diesbezüglich wird in der US 5 329 908 vorgeschlagen, das Erdgas nicht während des Ansaugtaktes des Motors, sondern zum Ende des Verdichtungstaktes nach Art eines Dieselmotors in den Zylinder einzublasen. Letzteres setzt voraus, daß der Druck des Erdgases im Vorratstank über 138 bar (2000 psi) liegt, damit das Erdgas gegen den im Zylinder herrschenden Druck einströmen kann. Das Erdgas wird derart eingeblasen, daß ein Teil hiervon die Zündkerze erreicht, um sogleich entzündet zu werden. Der hohe erforderliche Druck ist im Gastank des Erdgases vorhanden, wenn dieser zu mindestens 75% gefüllt ist. Unterhalb dieses Füllungsgrades sinkt der Druck, so daß auf ein übliches Einblasen des Erdgases während des Ansaugtaktes umgeschaltet wird. Darüber hinaus wird in der US 5 329 908 vorgeschlagen, durch eine Pumpe den Druck des Erdgases aktiv ständig auf einem ausreichend hohen Niveau zu halten, um ein Einblasen gegen Ende des Verdichtungstaktes zu ermöglichen. Dies ist jedoch mit einem erheblichen Aufwand und zusätzlichem Energieverbrauch verbunden.

Die US 6 202 601 B1 offenbart den Betrieb einer Brennkraftmaschine mit zwei verschiedenen Kraftstoffarten unterschiedlicher Entflammbarkeit, wobei der Hauptkraftstoff insbesondere Erdgas sein kann. Gemäß einem lastabhängigen Betriebsprogramm für die Brennkraftmaschine wird das Erdgas im Bereich mittlerer Lasten während des Ansaugtaktes oder zu Beginn des Kompressionstaktes injiziert. Bei niedrigen Lasten erfolgt die Injektion des Erdgases dagegen später, d.h. am Ende des Kompressionstaktes oder gar während des Expansionstaktes. Des Weiteren erfolgt auf die Injektion des Hauptkraftstoffes eine Injektion des Sekundärkraftstoffes, zum Beispiel von Dieselkraftstoff, um die Zündung im Zylinder zu erreichen.

Ferner ist aus der EP 760 424 A2 eine Brennkraftmaschine bekannt, bei der die Injektion von Erdgas nach dem Schließen der Einlaßventile begonnen und vor Vollendung des Kompressionstaktes beendet wird, wobei für die Injektion ein Bereich von vorzugsweise 180° bis 45° vor dem oberen Totpunkt des Kolbens genannt wird. Die Injektion erfolgt somit nicht während des Ansaugtaktes.

Vor diesem Hintergrund war es Aufgabe der vorliegenden Erfindung, eine Brennkraftmaschine und ein Verfahren zu deren Betrieb mit Erdgas bereitzustellen, welche bzw. welches mit möglichst geringem Aufwand einen hohen Wirkungsgrad erzielt.

Diese Aufgabe wird durch ein Verfahren mit den Merkmalen des Anspruchs 1 sowie durch eine Brennkraftmaschine mit den Merkmalen des Anspruchs 8 gelöst.

Vorteilhafte Ausgestaltungen sind in den Unteransprüchen enthalten.

Das erfindungsgemäße Verfahren dient dem Betreiben einer ViertaktBrennkraftmaschine mit Erdgas, wobei das Erdgas unter erhöhtem Druck gegen Ende des Ansaugtaktes oder während des Beginns des Kompressionstaktes in die mindestens eine Brennkammer der Brennkraftmaschine eingeblasen wird. Insbesondere kann das Einblasen des Erdgases zwischen 210° und 90° Kurbelwellenwinkel vor dem oberen Totpunkt des Kolbens erfolgen.

Das direkte Einblasen des Erdgases gegen Ende des Ansaugvorganges hat zunächst den Vorteil, daß die volle Luftmenge angesaugt wird, da sich diese nicht durch den Ergasvolumenanteil vermindert. Als Folge hieraus erhöht sich die Füllung im Zylinder, d.h. die Gesamtmenge des Luft-Kraftstoffgemisches (leichte Aufladung), was wiederum dazu führt, daß die Brennkraftmaschine ein höheres Drehmoment und mehr Leistung erzeugt. Der sich aus der größeren Gesamtmenge an Luft-Kraftstoffgemisch ergebende höhere Kompressionsdruck wirkt sich hierbei vorteilhaft aus, da dieser aufgrund der höheren Oktanzahl von Erdgas gegenüber Benzin nicht zu einer klopfenden Verbrennung führt. Der Wirkungsgrad des Motors wird somit verbessert, wobei sich auch die Gemischbildung aufgrund der nicht erforderlichen Sublimation von flüssig nach gasförmig gegenüber der Direkteinspritzung von flüssigen Kraftstoffen verbessert. Gegenüber dem aus der US 5 329 908 bekannten Stand der Technik findet das Einblasen des Erdgases früher statt, d.h. gegen Ende des Ansaugtaktes oder während des Beginns des Kompressionstaktes statt erst gegen Ende des Kompressionstaktes. Dies hat wiederum den Vorteil, daß für das Einblasen ein geringerer Druck des Erdgases erforderlich ist, so daß in der Regel bereits der ohnehin im Gasvorratstank herrschende Druck ausreicht. Der Einsatz zusätzlicher Hochdruckpumpen ist daher nicht erforderlich beziehungsweise es muß nicht wie beim Stand der Technik für 75% der Tankfüllung auf ein im Wirkungsgrad schlechteres Einblasen des Gases während des Ansaugtaktes ausgewichen werden.

Das Erdgas kann während des Einblasens in die Brennkammer einen Druck von weniger als 25 bar, vorzugsweise weniger als 20 bar aufweisen. Dieser Druck reicht einerseits aus, um den in der Brennkammer herrschenden Kompressionsdruck zu überwinden und entspricht andererseits einem typischen - unabhängig von der Tankfüllung vorhandenen - Druck des Erdgases im Vorratssystem.

Das Erdgas wird vorzugsweise in einem Gastank unter einem Druck von mehr als 15 bar, besonders bevorzugt mehr als 20 bar bevorratet. Derartige Drücke stellen sicher, daß im Vorratssystem selbst ein ausreichend hoher Druck herrscht, um Erdgas gegen den während des Kompressionstaktes in einer Brennkammer herrschenden Druck einzublasen.

Gemäß einer Weiterbildung des Verfahrens wird die Brennkraftmaschine mit einem stöchiometrischen Luft-Kraftstoffverhältnis betrieben. Ein stöchiometrischer Betrieb hat den Vorteil, daß eine im Abgassystem der Brennkraftmaschine angeordnete Abgasbehandlungseinrichtung - wie etwa ein Dreiwegekatalysator - mit besonders hohem Wirkungsgrad schädliche Emissionen aus dem Abgas entfernen kann.

Weiterhin wird das vorgeschlagene Einblasen von Erdgas gegen Ende des Ansaugtaktes oder während des Beginns des Kompressionstaktes vorzugsweise nur im oberen Teillastbereich und bei Vollast des Motors vorgenommen, während ansonsten (bei geringer bis normaler Teillast) das Erdgas während des Ansaugtaktes zugeführt wird. Dies hat den Vorteil, daß im Teillastbereich das freie Ansaugen des Erdgases eine Entdrosselung des Motors und damit eine Verringerung der Drosselverluste bewirkt.

Das bei dem vorgeschlagenen Verfahren verwendete Erdgas kann im Wesentlichen, das heißt zu 90- 100%, aus Methan (CH₄) bestehen.

Die Erfindung betrifft femer eine Brennkraftmaschine, die folgende Komponenten enthält:
- Mindestens eine Brennkammer mit einem Lufteinlaß, einem Einlaßventil, einem Luftauslaß, einem Auslaßventil, und einer steuerbaren Einblaseinrichtung für komprimiertes Erdgas. Selbstverständlich kann die Brennkammer auch mehrere Ventile beziehungsweise Einblaseinrichtungen enthalten, falls dies sinnvoll sein sollte. Die Ventile und die Einblaseinrichtung können geöffnet und geschlossen werden, um den Eintritt von Luft, den Austritt von Abgas und das Einblasen von Erdgas nach Wunsch zu steuern.
- Eine Motorsteuerung, die insbesondere mikroprozessorbasiert implementiert sein kann und welche mit dem Einlaßventil, dem Auslaßventil und der Einblaseinrichtung verbunden ist.

Die Brennkraftmaschine ist dadurch gekennzeichnet, daß die Motorsteuerung derart ausgebildet ist, daß diese ein Verfahren der vorstehend erläuterten Art ausführen kann. Die Motorsteuerung kann demnach das Öffnen und Schließen des Ei n-laßventils und des Auslaßventils sowie der Einblaseinrichtung derart steuern, daß das Einblasen des komprimierten Erdgases gegen Ende des Ansaugtaktes oder während des Beginns des Kompressionstaktes erfolgt. Dies gilt zumindest dann, wenn sich der Motor im oberen Teillastbereich oder bei Vollast befindet. Mit einer derartigen Brennkraftmaschine lassen sich die vorstehend beschriebenen Vorteile erzielen, d.h. ein höherer Wirkungsgrad des Motors aufgrund des "normalen" Liefergrades und der leichten Aufladung, wobei dies ohne zusätzliche Pumpen etc. und im Wesentlichen unabhängig vom Füllungsgrad des Erdgasvorrats geschieht.
Die Brennkraftmaschine weist bevorzugt ferner mindestens einen Vorratstank auf, in welchem das Erdgas für den Verbrauch bevorratet werden kann.

Im Abgasweg der Brennkraftmaschine ist vorteilhafterweise eine Abgasnachbehandlungseinrichtung - wie etwa ein Dreiwegekatalysator - angeordnet, um schädliche Emissionen aus den Abgasen zu entfemen.

Die Erfindung wird nachfolgend anhand der Figuren beispielhaft näher erläutert. Es zeigen:
- Fig. 1: schematisch eine erfindungsgemäße Brennkraftmaschine im Ansaugtakt,
- Fig. 2: die Brennkraftmaschine im Kompressionstakt,
- Fig. 3: die Brennkraftmaschine im Expansionstakt und
- Fig. 4: die Brennkraftmaschine im Ausstoßtakt.

In den vier Figuren sind die aufeinanderfolgenden Takte in einer erfindungsgemäß mit Erdgas betriebenen Brennkraftmaschine dargestellt. In einem Zylinder 2 der Brennkraftmaschine bewegt sich in bekannter Weise ein Kolben 1 auf und ab, welcher eine Kurbelwelle 13 über eine Pleuelstange 14 antreibt. Der Zylinder 2 weist einen Lufteinlaß 3 mit einer darin befindlichen Drosselklappe 4 auf. Am Eintritt des Lufteinlasses 3 in den Zylinder 2 ist ein Einlaßventil 5 angeordnet. Ferner weist der Zylinder 2 einen Abgasauslaß 10 mit einem darin befindlichen Auslaßventil 11 auf. Der Kolben 1 und der Zylinder 2 sowie ein Zylinderkopf begrenzen gemeinsam die Brennkammer 12.

Des weiteren ist im Zylinderkopf eine Zündkerze 7 zum Zünden des Luft-Kraftstoffgemisches sowie eine Einblasdüse 8 für komprimiertes Erdgas, welches in einem Gastank 6 bevorratet wird, vorgesehen. Die Ventile 5 und 11, das Einblasventil 8 sowie die Zündkerze 7 sind mit einer Motorsteuerung 9 verbunden, welche typischerweise mittels eines Mikroprozessors realisiert ist und den Motor im oberen Teillastbereich und im Vollastbereich in der nachfolgend beschriebenen Weise steuert.

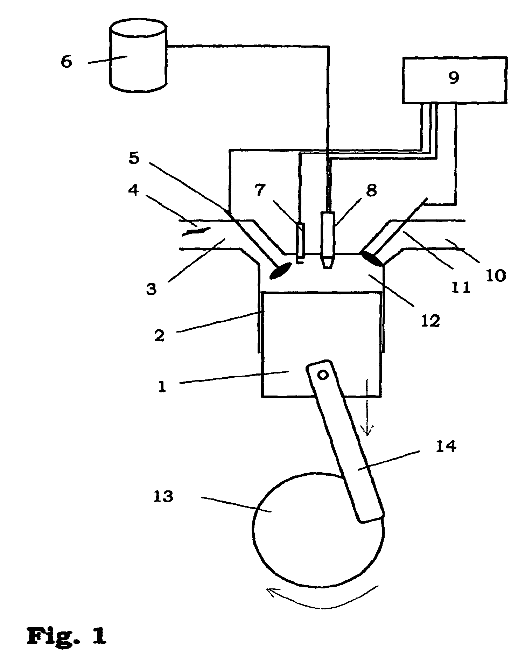

In dem in Figur 1 dargestellten Ansaugtakt bewegt sich der Kolben 1 zunächst nach unten und saugt bei geöffnetem Einlaßventil 5 über den Lufteinlaß 3 Frischluft an (Blockpfeil).

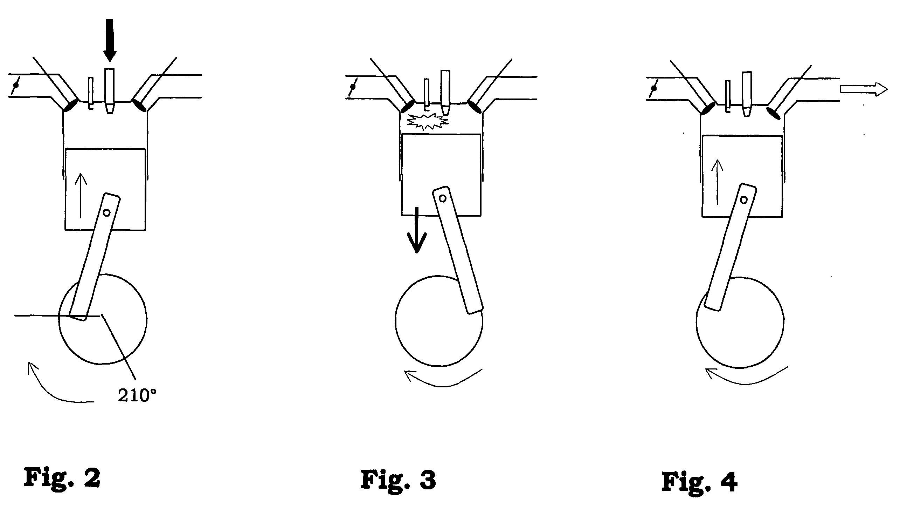

In dem in Figur 2 dargestellten Kompressionstakt ist das Einlaßventil geschlossen, und der Kolben 1 bewegt sich wieder nach oben. Dabei komprimiert dieser die eingeschlossene Luft, da auch das Auslaßventil (weiterhin) geschlossen ist. Erfindungsgemäß wird in diesem Kompressionstakt über die Einblaseinrichtung 8 Erdgas unter einem Druck von typischerweise 20 bar eingeblasen. Insbesondere kann das Einblasen wie dargestellt zwischen 210° und 90° vor dem oberen Totpunkt des Kolbens erfolgen. Die Direkteinblasung in dieser Phase hat den Vorteil, daß hierfür einerseits der im Vorratssystem ohnehin herrschende Gasdruck ausreicht, und daß andererseits der Wirkungsgrad des Motors verbessert wird, da im vorangegangenen Ansaugtakt nur Luft und kein Luft-Gasgemisch angesaugt werden konnte.

Figur 3 stellt den Expansions- oder Verbrennungstakt dar, in welchem das gezündete Luft-Kraftstoffgemisch expandiert und den Kolben 1 nach unten treibt. Beide Ventile sind dabei geschlossen.

Figur 4 zeigt schließlich als letzten Takt den Ausstoßtakt, bei welchem das Auslaßventil 11 geöffnet ist, so daß der sich nach oben bewegende Kolben die Verbrennungsgase aus der Brennkammer ausstoßen kann.

## Patentansprüche

1. Verfahren zum Betrieb einer Brennkraftmaschine mit Erdgas, wobei:
das Erdgas unter Druck in die Brennkammer (12) eingeblasen wird,
**dadurch gekennzeichnet,daß**
im oberen Teillastbereich und bei Volllast das Einblasen des Erdgases gegen Ende des Ansaugtaktes oder zu Beginn des Kompressionstaktes erfolgt, während ansonsten bei geringer bis normaler Teillast das Erdgas während des Ansaugtaktes zugeführt wird.

2. Verfahren nach Anspruch 1,
**dadurch gekennzeichnet,daß**
das Einblasen des Erdgases zwischen 210° und 90° vor dem oberen Totpunkt des Kolbens (1) erfolgt.

3. Verfahren nach Anspruch 1 oder 2,
**dadurch gekennzeichnet,daß**
das Erdgas während des Einblasens einen Druck von weniger als 25 bar, vorzugsweise weniger als 20 bar aufweist.

4. Verfahren nach einem der Ansprüche 1 bis 3,
**dadurch gekennzeichnet,daß**
das Erdgas in einem Gastank (6) unter einem Druck von mehr als 15 bar, vorzugsweise mehr als 20 bar bevorratet wird.

5. Verfahren nach einem der Ansprüche 1 bis 4,
**dadurch gekennzeichnet,daß**
die Brennkraftmaschine mit einem stöchiometrischen Luft-KraftstoffVerhältnis betrieben wird.

6. Verfahren nach einem der Ansprüche 1 bis 5,
**dadurch gekennzeichnet,daß**
das Erdgas im Wesentlichen aus Methan besteht.

7. Brennkraftmaschine enthaltend:
mindestens eine Brennkammer (12) mit einem Lufteinlass (3), einem Einlassventil (5), einem Luftauslass (10), einem Auslassventil (11), und einer steuerbaren Einblaseinrichtung (8) für komprimiertes Erdgas sowie
eine Motorsteuerung (9), welche mit dem Einlassventil, dem Auslassventil und der Einblaseinrichtung verbunden ist
**dadurch gekennzeichnet,daß**
die Motorsteuerung derart ausgebildet ist, daß diese ein Verfahren nach einem der Ansprüche 1 bis 6 ausfürht.

8. Brennkraftmaschine nach Anspruch 7,
**dadurch gekennzeichnet, daß**
diese einen Vorratstank (6) für das Erdgas aufweist.

9. Brennkraftmaschine nach Anspruch 7 oder 8,
**dadurch gekennzeichnet,daß**
im Abgasweg der Brennkraftmaschine eine Abgasnachbehandlungseinrichtung angeordnet ist.

## Claims

1. Method for operating an internal combustion engine with natural gas, in which:
the natural gas is blown into the combustion chamber (12) in compressed form,
**characterized in that**
in the upper part-load range and at full load, the natural gas is blown in towards the end of the intake stroke or at the start of the compression stroke, whereas otherwise, at low or normal part-load, the natural gas is supplied during the intake stroke.

2. Method according to Claim 1, **characterized in that** the natural gas is blown in between 210° and 90° before the top dead centre of the piston (1).

3. Method according to Claim 1 or 2, **characterized in that** the natural gas is at a pressure of less than 25 bar, preferably less than 20 bar, while it is being blown in.

4. Method according to one of Claims 1 to 3, **characterized in that** the natural gas is stored in a gas tank (6) at a pressure of more than 15 bar, preferably more than 20 bar.

5. Method according to one of Claims 1 to 4, **characterized in that** the internal combustion engine is operated with a stoichiometric air/fuel ratio.

6. Method according to one of Claims 1 to 5, **characterized in that** the natural gas substantially comprises methane.

7. Internal combustion engine, including:
at least one combustion chamber (12) having an air intake (3), an intake valve (5), an air exhaust (10), an exhaust valve (11), and a controllable injection device (8) for blowing in compressed natural gas, and
an engine control unit (9) which is connected to the intake valve, the exhaust valve and the injection device,
**characterized in that**
the engine control unit is designed in such a manner that it carries out a method according to one of Claims 1 to 6.

8. Internal combustion engine according to Claim 7, **characterized in that** it has a storage tank (6) for the natural gas.

9. Internal combustion engine according to Claim 7 or 8, **characterized in that** an exhaust-gas aftertreatment device is arranged in the exhaust-gas path of the internal combustion engine.

## Revendications

1. Procédé d'opération d'un moteur à combustion interne avec du gaz naturel, dans lequel :
le gaz naturel est injecté sous pression dans la chambre de combustion (12),
**caractérisé en ce que**
dans la partie de charge partielle supérieure, et pour une pleine charge, l'injection du gaz naturel a lieu vers la fin du temps d'admission ou au début du temps de compression, tandis que par ailleurs, pour une charge partielle faible à normale, le gaz naturel est introduit pendant le temps d'admission.

2. Procédé selon la revendication 1,
**caractérisé en ce que**
l'injection du gaz naturel a lieu entre 210° et 90° avant le point mort haut du piston (1).

3. Procédé selon la revendication 1 ou 2,
**caractérisé en ce que**
le gaz naturel présente, pendant l'injection, une pression inférieure à 25 bars, de préférence inférieure à 20 bars.

4. Procédé selon l'une quelconque des revendications 1 à 3,
**caractérisé en ce que**
le gaz naturel est stocké dans un réservoir de gaz (6) à une pression supérieure à 15 bars, de préférence supérieure à 20 bars.

5. Procédé selon l'une quelconque des revendications 1 à 4,
**caractérisé en ce que**
le moteur à combustion interne est opéré avec un rapport air-carburant stoechiométrique.

6. Procédé selon l'une quelconque des revendications 1 à 5,
**caractérisé en ce que**
le gaz naturel se compose essentiellement de méthane.

7. Moteur à combustion interne comprenant :
au moins une chambre de combustion (12) avec une admission d'air (3), une soupape d'admission (5), un échappement d'air (10), une soupape d'échappement (11) et un dispositif d'injection commandable (8) pour le gaz naturel comprimé, ainsi
qu'une commande motorisée (9) qui est connectée à la soupape d'admission, la soupape d'échappement et le dispositif d'injection,
**caractérisé en ce que**
la commande motorisée est réalisée de telle sorte qu'elle mette en oeuvre un procédé selon l'une quelconque des revendications 1 à 6.

8. Moteur à combustion interne selon la revendication 7,
**caractérisé en ce que**
celui-ci présente un réservoir de stockage (6) pour le gaz naturel.

9. Moteur à combustion interne selon la revendication 7 ou 8,
**caractérisé en ce que**
l'on dispose dans la trajectoire du gaz d'échappement du moteur à combustion interne un dispositif de post-traitement de gaz d'échappement.
